# EUROPEAN PATENT SPECIFICATION

(11) **EP 1 721 525 B1**
(45) Date of publication and mention of the grant of the patent: **19.05.2010**
(21) Application number: 06111873.3
(22) Date of filing: 29.03.2006
(51) Int. Cl.: A21B 1/26, F24C 15/32

(54) **Heat exchanger for forced convection ovens, particularly for cooking food**
Wärmetauscher für Umluft-Öfen, insbesondere für Garöfen
Echangeur de chaleur pour convection forcée, notamment four de cuisson

(30) Priority: 13.04.2005 IT PD20050025 U
(43) Date of publication of application: 15.11.2006
(73) Proprietor: Unox S.p.A., 35010 Vigodarzere (Padova) (IT)
(72) Inventor: FRANZOLIN, Enrico, 35010, VIGODARZERE PD (IT)
(74) Representative: Modiano, Micaela Nadia

(56) References cited:
- EP-A- 0 599 103
- EP-A- 1 310 742
- DE-A1- 4 418 683

## Description

The present invention relates to a heat exchanger for forced convection ovens, particularly for cooking food.

Currently known heat exchangers for forced convection ovens are constituted generally by a compartment which is at least partially open onto the cooking chamber of the oven to which it belongs, and inside which there are two column-shaped tubular ducts, which are adapted to be crossed by the hot air produced by underlying burner means.

One or more fans are provided between such ducts, which convey the hot air toward an evacuation manifold, in order to recirculate the air inside the oven, which is heated by conduction through the walls of the ducts.

Such ducts are engaged by means of their lower end so as to surround underlying complementarily shaped side walls which are arranged perimetrically with respect to corresponding ports which open onto the bottom of the compartment and are open onto facing additional ports of an underlying box-like body which contains the burner means.

The connection between the bottom of the heat exchange compartment and the ducts is obtained, as mentioned, by simple engagement of the lower ends on the side walls of the ports without welding operations, therefore very cheaply, as well as in a structurally convenient manner.

The absence of welds in fact improves the resistance of the various parts to thermal stresses, eliminating the risk of breakage.

Although these known exchangers are appreciated and used successfully in many kinds of oven, they have aspects which can be improved.

First of all, the engagement of the tubular ducts on the side walls of the ports, which is not sealed, allows the pressure difference between the inside of the duct and the compartment that contains them to aspirate the water droplets that have collected on the bottom of the compartment due to the collection of the cooking vapors.

These aspirated droplets tend to slide on the inside of the connecting side walls and then fall onto the underlying burner means, preventing their optimum efficiency.

A heat exchanger for ovens, having the features set forth in the preamble of claim 1, is known from EP-1 310 742 A2.

The aim of the present invention is to provide a heat exchanger for forced convection ovens, particularly for cooking food, which is capable of obviating the drawback revealed by known types of similar exchanger.

Within this aim, an object of the present invention is to provide an exchanger which can avoid any dripping onto the burner means.

Another object of the present invention is to provide an exchanger in which the connection between the ducts and the bottom of the exchange compartment is provided without resorting to welding operations.

Another object of the present invention is to provide an exchanger which is not less efficient than known exchangers.

A further object of the present invention is to provide an exchanger which can increase the power of the burner means.

A still further object of the present invention is to provide a heat exchanger for forced convection ovens, particularly for cooking foods, which can be manufactured with known systems and technologies.

This aim and these and other objects, which will become better apparent hereinafter, are achieved by a heat exchanger for forced convection ovens, according to the present invention, has the features of claim 1.

A forced convection oven comprising a heat exchanger, according to invention, is defined in claim 7.

Further characteristics and advantages of the invention will become better apparent from the following detailed description of a preferred but not exclusive embodiment thereof, illustrated by way of non-limiting example in the accompanying drawings, wherein:

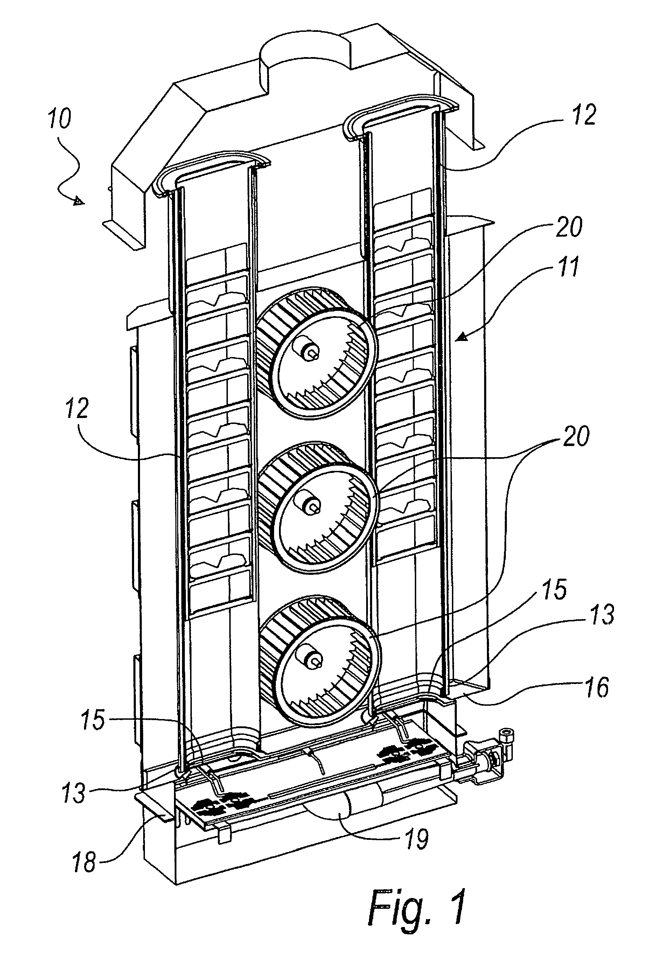

Figure 1 is a cutout perspective view of an exchanger according to the invention;

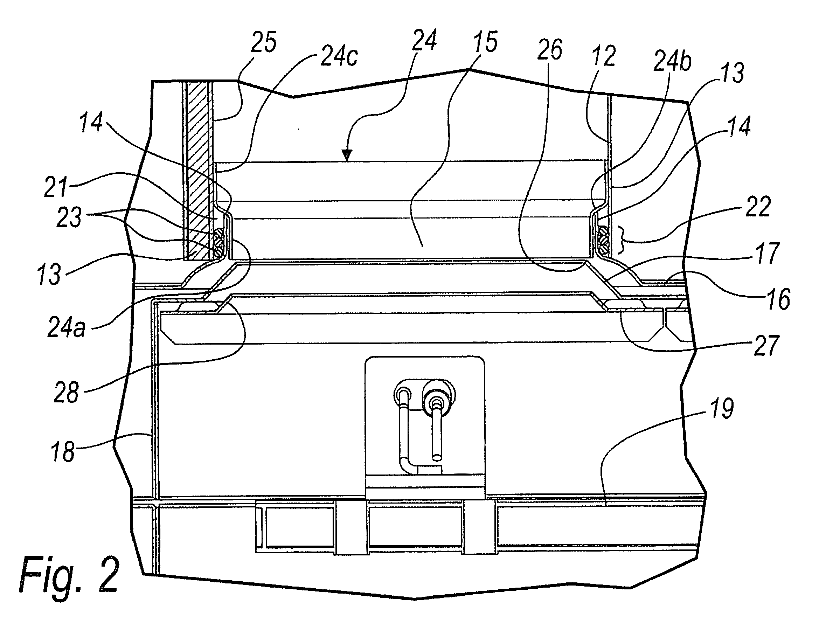

Figure 2 is a sectional front view of a detail of an exchanger according to the invention;
Figure 3 is a sectional front view of another detail of an exchanger according to the invention.

With reference to the figures, a heat exchanger for forced convection ovens, particularly for cooking food, according to the invention, is generally designated by the reference numeral 10.

The exchanger 10 is constituted by a compartment 11, which is at least partially open onto the cooking chamber of the oven to which it belongs, said cooking chamber not being illustrated for the sake of simplicity.

In the embodiment described here, two column-shaped tubular ducts 12 are provided within the compartment 11.

The compartment 11, its bottom 16 and the ducts 12 are manufactured by mechanical working of sheet metal.

The ducts 12 are engaged, by their lower end 13, so as to surround underlying complementarily shaped side walls 14, which are arranged perimetrically with respect to corresponding ports 15, which are open onto the bottom 16 of the compartment 11.

The side walls 14 are obtained by drawing.

The ports 15 in turn are open onto facing additional ports 17 of an underlying box-like body 18, which contains burner means 19.

The burner means 19 are constituted by a gas burner.

Between the ducts 12 there are three fans 20 for recirculating the air in the oven.

The number of fans 20 is to be understood as a non-limiting example of the invention.

An interspace 21 formed between each one of the side walls 14 and the respective lower end 13 of the tubular duct 12 fitted thereon is obstructed by way of means for stopping the rise of any water droplets that are present in the vicinity of the region of contact between the lower end 13 of each duct 12 and the bottom 16 of the compartment 11, said suction of water droplets into the duct occurring in known types of heat exchanger.

Such retention means are constituted by a collar 22 which is arranged within the interspace 21.

The collar 22 forms a labyrinth-like portion for mechanically slowing the rise of the droplets.

In the embodiment of the invention described here, the collar 22 is constituted by three rings 23, which are made of metallic material and are superimposed and in mutual contact and, when heated by their proximity to the burner means 19, are adapted to produce the evaporation of the water droplets that come into contact with them.

In particular, the rings 23 are made of steel.

The rings 23 therefore form a mechanical and thermal barrier against water droplets, and are components which are relatively cheap to manufacture and extremely simple to assemble to the rest of the exchanger 10.

The retention means also comprise a tubular element 24 for each one of the ports 15 on the bottom 16 of the compartment 11.

The tubular element 24 is shaped into three portions.

A first portion 24a is adapted to be inserted within the respective side wall 14.

A second portion 24b lies above the side wall 14 and has a transverse cross-section which increases until it makes contact with the inside wall 25 of the duct 12.

The second portion 24b then expands until it closes completely the interspace 21, forming an additional barrier to the water droplets or to the steam that might seep between the rings 23 in order to enter the duct 12.

There is also a third portion 24c, which is shaped complementarily with respect to the internal wall 25 of the duct 12 and onto which the lower end 13 of the duct 12 is forced.

The additional ports 17 of the box-like body 18 which contains the gas burner have an end cross-section 26 which is smaller than the cross-section of the facing first portion 24a of the tubular element 24.

The additional ports 17 are conveniently frustum-shaped, so as to divert any droplets that seep between one side wall 14 and the corresponding first portion 24a of the tubular element 24 which is inserted in the side wall 14.

The additional frustum-shaped ports 17 therefore constitute another protection against droplets for the burner.

Further, a flame protection baffle 27 is provided for each flame within the box-like body 18 of the burner means 19.

The opening 28 for the flame has edges which are frustum-shaped, in a manner similar to the overlying additional port 17 of the box-like body 18.

The present invention also relates to a heat exchanger with enhanced burner.

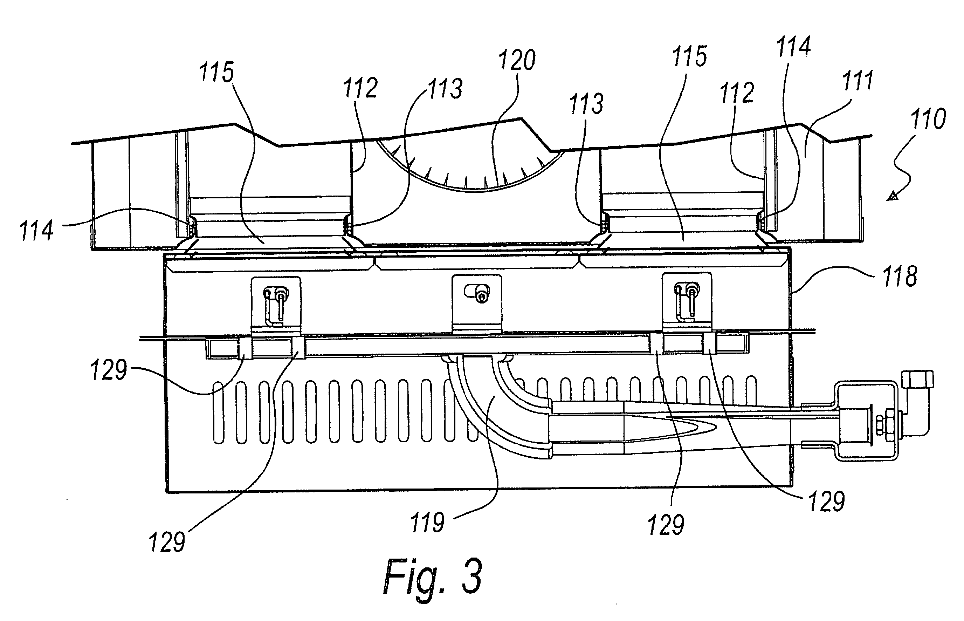

Such heat exchanger for ovens with forced convection, particularly for cooking food, designated by the reference numeral 110 in Figure 3, is also of the type which is constituted by a compartment 111 with two column-shaped tubular ducts 112, engaged by their lower end 113 so as to surround underlying complementarily shaped side walls 114 arranged perimetrically with respect to ports 115 which are open on the bottom of the compartment 111.

The ports 115 in turn are open onto facing additional ports of the box-like body 118 which contains the burner means 119.

At least one fan 120 for recirculating air in the oven is provided between the ducts 112.

The exchanger 110 is characterized in that the burner means 119 are provided by a gas burner which has, at each duct 112, two channels 129 for the secondary air instead of a single one as in known exchangers.

The two channels 129 are adapted to improve gas combustion and increase burner efficiency.

In practice it has been found that the invention thus described solves the problems noted in known types of heat exchanger for forced convection ovens, particularly for cooking food.

In particular, the present invention provides an exchanger which is capable of avoiding any dripping onto the burner means.

Moreover, the present invention provides an exchanger in which the connection between the ducts and the bottom of the exchange compartment is provided without resorting to welding operations.

Moreover, the present invention provides an exchanger which is more efficient than known exchangers thanks to enhanced burner means.

Further, the present invention provides a heat exchanger for forced convection ovens, particularly for cooking food, which can be manufactured economically with known facilities and technologies.

In practice, the materials employed, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A heat exchanger for forced convection ovens with cooking chamber, constituted by a compartment (11) which is connectable to an oven so as at least partially open onto the cooking chamber thereof, the heat exchanger comprising: at least two column-shaped tubular ducts (12) provided within said compartment (11) and being engaged to surround with their lower end (13) underlying complementarily shaped side walls (14), said side walls (14) being arranged perimetrically with respect to corresponding ports (15) which are open on the bottom (16) of said compartment (11); an underlying box-like body (18) which contains burner means (19), said ports (15) being open onto facing additional ports (17) of said underlying box-like body (18); and at least one fan (20) for recirculating air in the oven being provided between said ducts (12), **characterized in that** it further comprises droplet retention means ( 22, 23, 24) provided at an interspace (21) formed between each one of said side walls (14) and the respective lower end (13) of the tubular duct (12) fitted thereon so as to obstruct said interspace (21) for stopping the rise of any droplets of water that are present in the vicinity of the region of contact between said lower end (13) of each duct (12) and said bottom (16) of the compartment (11).

2. The exchanger according to claim 1, **characterized in that** said retention means comprise a collar (22), which is arranged within said interspace (21) and is adapted to form a labyrinth-like portion for mechanically slowing the upward motion of the droplets.

3. The exchanger according to claim 2, **characterized in that** said collar (22) is constituted by three rings (23) made of metallic material, which are superimposed and in mutual contact and which, being overheated by their proximity to the burner means (19), are adapted to cause the evaporation of the water droplets that come into contact with them.

4. The exchanger according to one or more of the preceding claims, **characterized in that** said means for stopping the rise of droplets comprise a tubular element (24) for each one of the ports (15) on the bottom (16) of the compartment (11), said tubular element (24) being shaped so as to be inserted with a first portion (24a) within the respective side wall (14) and so as to lie over it with a second portion (24b) which has a transverse cross-section which increases until it makes contact with the inside wall (25) of the duct (12).

5. The exchanger according to claim 4, **characterized in that** said additional ports (17) of the box-like body (18) containing the burner means (19) have an end cross-section (26) which is smaller than the cross-section of the facing first portion (24a) of said tubular element (24), said additional ports (17) being frustum-shaped and being adapted to redirect any droplets that seep between said side walls (14) and the first portions (24a) of the tubular element (24) which are inserted in the side walls (14).

6. The exchanger according to claim 5, **characterized in that** it further comprises, within the box-like body (18) containing the burner means (19), for each flame, a flame protection baffle (27) with an opening (28) for the flame that has frustum-shaped edges in a manner similar to the overlying additional port (17) of the box-like body (18).

7. A forced convection oven with cooking chamber comprising a heat exchanger according to claim 1.

## Patentansprüche

1. Wärmeaustauscher für Umluftöfen mit einem Garraum, der von einer Kammer (11) gebildet ist, die derart mit einem Ofen verbindbar ist, dass sie sich wenigstens teilweise zum Garraum öffnet, wobei der Wärmeaustauscher wenigstens zwei säulenartige, rohrförmige Führungen (12), die innerhalb der Kammer (11) vorgesehen sind und eingesetzt sind, um mit ihrem unteren Ende (13) unter komplementär geformten Seitenwänden (14) zu liegen, wobei die Seitenwände (14) perimetrisch in Bezug auf entsprechende Öffnungen (15) angeordnet sind, welche offen auf der Bodenfläche (16) der Kammer (11) sind, einen unten liegenden boxartigen Körper (18), welcher Brennermittel (19) aufweist, wobei die Öffnungen (15) offen zu gegenüberliegenden zusätzlichen Öffnungen (17) des unten liegenden boxartigen Körpers (18) sind, und wenigstens ein Gebläse (20) zum Umwälzen von Luft im Ofen aufweist, welches zwischen den Führungen (12) angeordnet ist,
**dadurch gekennzeichnet,**
**dass** dieser weiterhin Tropfenrückhaltemittel (22,23,24) aufweist, welche an einem Zwischenraum (21) angeordnet sind, der zwischen jeweils einer der Seitenwände (14) und dem jeweiligen unteren Ende (13) der rohrförmigen Führung (12) gebildet ist und darauf derart angepasst ist, um diesen Zwischenraum (21) zu behindern, um das Aufsteigen irgendwelcher Wassertropfen zu stoppen, welche in der Nachbarschaft des Kontaktbereiches zwischen dem unteren Ende (13) der jeweiligen Führung (12) und dem Boden (16) der Kammer (11) vorhanden sind.

2. Wärmeaustauscher nach Patentanspruch 1,
**dadurch gekennzeichnet,**
**dass** die Rückhaltemittel einen Bund (22) aufweisen, der innerhalb des Zwischenraumes (21) angeordnet ist und angepasst ist, um einen labyrinthförmigen Bereich zur mechanischen Verzögerung der Aufwärtsbewegung der Tropfen zu bilden.

3. Wärmeaustauscher nach Patentanspruch 2,
**dadurch gekennzeichnet,**
**dass** der Bund (22) von drei Ringen (23) aus Metallmaterial gebildet ist, die übereinander angeordnet und in wechselseitigem Kontakt sind und die, wenn sie durch ihre Nachbarschaft zu den Brennermitteln (19) überhitzt sind, angepasst sind, um die Verdampfung der Wassertropfen zu bewirken, die mit ihnen in Kontakt kommen.

4. Wärmeaustauscher nach irgendeinem oder mehreren der vorangehenden Patentansprüche,
**dadurch gekennzeichnet,**
**dass** die Mittel zum Stoppen des Aufsteigens der Tropfen ein rohrförmiges Element (24) für jeweils eine der Öffnungen (15) auf dem Boden (16) der Kammer (11) aufweisen, wobei das rohrförmige Element (24) derart geformt ist, um in einen ersten Bereich (24a) innerhalb der jeweiligen Seitenwand (14) eingefügt zu werden, und um über diesen mit einem zweiten Bereich (24b) zu liegen, welcher einen transversalen Querschnitt aufweist, der ansteigt, bis er in Kontakt mit der innenseitigen Wand (25) der Führung (12) kommt.

5. Wärmeaustauscher nach Patentanspruch 4,
**dadurch gekennzeichnet,**
**dass** die zusätzlichen Öffnungen (17) des boxartigen Körpers (18), welcher die Brennermittel (19) enthält, einen Endquerschnitt (26) aufweisen, der kleiner ist als der Querschnitt des gegenüberliegenden ersten Bereiches (24a) des rohrförmigen Elementes (24), wobei die zusätzlichen Öffnungen (17) kegelstumpfförmig geformt sind und angepasst sind; um irgendwelche Tropfen abzulenken, die zwischen die Seitenwände (14) und die ersten Bereiche (24a) des rohrförmigen Elementes (24) hindurchtreten, welche in die Seitenwände (14) eingefügt sind.

6. Wärmeaustauscher nach Patentanspruch 5,
**dadurch gekennzeichnet,**
**dass** dieser weiterhin innerhalb des boxartigen Körpers (18), der die Brennermittel (19) enthält, für jede Flamme ein Flammenschutzblech (27) mit einer Öffnung (28) für die Flamme aufweist, welche kegelstumpfförmige Kanten in einer Weise ähnlich zu der obenliegenden zusätzlichen Öffnung (17) des boxartigen Körpers (18) aufweist.

7. Umluftofen mit Garraum, welcher einen Wärmeaustauscher gemäß Patentanspruch 1 aufweist.

## Revendications

1. Echangeur thermique pour fours à convection forcée avec une enceinte de cuisson, constitué par un compartiment (11) pouvant être raccordé à un four de manière à donner au moins partiellement sur l'enceinte de cuisson de celui-ci, l'échangeur thermique comprenant: an moins deux conduites tubulaires en forme de colonne (12), prévues à l'intérieur dudit compartiment (11) et fixées de sorte que leur extrémité inférieure (13) entoure des parois latérales sons-jacentes de forme complémentaire (14), lesdites parois latérales (14) étant disposées sur le pourtour des orifices correspondants (15), qui sont ouverts dans le fond (16) dudit compartiment (11), un corps sous-jacent en forme de caisse (18), qui contient des brûleurs (19), lesdits orifices (15) donnant sur des orifices supplémentaires en regard (17) dans ledit corps sous-jacent en forme de caisse (18) et au moins un ventilateur (20) pour la circulation d'air dans le four, ventilateur, qui est prévu entre lesdites conduites tubulaires (12), **caractérisé en ce qu'**il comprend, en outre, un moyen de rétention de gouttelettes (22, 23, 24) prévu au niveau d'un espace intermédiaire (21) formé entre chacune desdites parois latérales (14) et l'extrémité inférieure respective (13) de la conduite tubulaire (12) fixée sur celles-ci, de manière à obstruer ledit espace intermédiaire (21) afin d'arrêter la montée de gouttelettes d'eau présentes dans le voisinage de la zone de contact entre ladite extrémité inférieure (13) de chaque conduite tubulaire (12) et le fond (16) du compartiment (11).

2. Echangeur thermique suivant la revendication 1, **caractérisé en ce que** ledit moyen de rétention comprend un collet (22), qui est disposé à l'intérieur dudit espace intermédiaire (21) et qui est adapté à former une portion en forme de labyrinthe afin de ralentit mécaniquement le mouvement vers le haut des gouttelettes.

3. Echangeur thermique suivant la revendication 2 **caractérisé en ce que** ledit collet (22) est constitué par trois anneaux (23) fabriqués en une matière métallique, anneaux, qui sont superposés et mutuellement en contact et qui sont adaptés, étant donné qu'ils sont surchauffés en raison de la proximité des brûleurs (19), à provoquer l'évaporation des gouttelettes d'eau entrant en contact avec eux.

4. Echangeur thermique suivant une ou plusieurs des revendications précédentes, **caractérisé en ce que** ledit moyen servant à arrêter la montée de gouttelettes comprend un élément tubulaire (24) pour chacun des orifices (15) dans le fond (16) du compartiment (11), ledit élément tubulaire (24) étant formé de façon à être inséré avec une première portion (24a), dans la paroi latérale respective (14) et de façon à reposer sur celle-ci avec une seconde portion (24b), dont la section transversale va en s'accroissant jusqu'à ce qu'elle entre en contact avec la paroi interne (25) de la conduite tubulaire (12).

5. Echangeur thermique suivant la revendication 4, **caractérisé en ce que** lesdits orifices supplémentaires (17) du corps en forme de caisse (18) contenant les brûleurs (19) présentent une section transversale de bout (26), qui est plus petite que la section transversale de la première portion en regard (24a) dudit élément tubulaire (24), lesdits orifices supplémentaires (17) étant de forme tronconique et adaptés à donner une nouvelle direction aux gouttelettes qui suintent entre lesdites parois latérales (14) et les premières portions (24a) de l'élément tubulaire (24) insérées dans les parois latérales (14).

6. Echangeur thermique suivant la revendication 5, **caractérisé en ce qu'**il comprend, en outre, à l'intérieur du corps en forme de caisse (18) contenant les brûleur (19), un écran de protection (27) pour chaque flamme avec une ouverture (28) pour la flamme, ouverture, dont les arêtes sont de forme tronconique similaire à celle de l'orifice supplémentaire (17) sus-jaceut du corps en forme de caisse (18).

7. Four à convection forcée avec une enceinte de cuisson comprenant un échangeur thermique suivant la revendication 1.
